# EUROPÄISCHE PATENTSCHRIFT

(11) **EP 1 671 742 B1**
(45) Veröffentlichungstag und Bekanntmachung des Hinweises auf die Patenterteilung: **11.04.2007**
(21) Anmeldenummer: 05405368.1
(22) Anmeldetag: 06.06.2005
(51) Int. Cl.: B23Q 1/48, B23Q 1/70

(54) **Antriebseinheit für ein Bearbeitungswerkzeug**
Drive unit for working tool
Unite de commande pour outil de travail

(30) Priorität: 17.12.2004 CH 20892004
(43) Veröffentlichungstag der Anmeldung: 21.06.2006
(73) Patentinhaber: Suhner Intertrade AG, 5200 Brugg (CH)
(72) Erfinder: Isenschmid, Hans, 5107 Schinznach-Dorf (CH)
(74) Vertreter: Gachnang, Hans Rudolf

(56) Entgegenhaltungen:
- CH-A5- 679 289
- PATENT ABSTRACTS OF JAPAN Bd. 008, Nr. 230 (M-333), 23. Oktober 1984 (1984-10-23) & JP 59 110506 A (TOYOTA JIDOSHA KK), 26. Juni 1984 (1984-06-26)

## Beschreibung

Gegenstand der Erfindung ist eine Antriebseinheit für ein Bearbeitungswerkzeug gemäss Oberbegriff des Patentanspruchs 1 (CH 679 289 A).

Antriebseinheiten dieser Gattung sind bekannt und werden überwiegend für die automatische Bearbeitung von Werkstücken aus Metall als Teil von Bearbeitungszentren eingesetzt. Solche Bearbeitungseinheiten sind autonome Maschinen, die je nach Einsatzzweck für unterschiedliche Metallbearbeitungen eingesetzt werden können.

Bei einer bekannten Antriebseinheit wird die Pinole, welche die das Werkzeug aufnehmende Spindel im Gehäuse längsverschiebbar trägt, durch eine axial verlaufende Nut, in welche ein Nutenstein oder dergleichen eingreift, gegen Verdrehung gehalten. Diese bekannten Nutenführungen, welche wohl eine Längsverschiebung ermöglichen, jedoch eine Verdrehung verhindern, sind in der Umgebung, in welcher solche Antriebseinheiten eingesetzt werden, einer recht grossen Verschmutzung ausgesetzt. Die Verschmutzung der Führungsnut kann aber zu Betriebsstörungen führen. Selbstverständlich könnte die Nut durch entsprechende Dichtmittel, wie Manschetten, vor Verschmutzung geschützt werden, doch sind solche zusätzlichen Massnahmen für die an sich recht kostengünstig herstellbaren Antriebseinheiten aufwändig und daher wirtschaftlich uninteressant.

Eine Aufgabe der vorliegenden Erfindung ist die Schaffung einer Antriebseinheit, bei der die Pinole geschützt vor Verschmutzung exakt längsführbar und gegen Verdrehung geschützt ist. Eine weitere Aufgabe besteht darin, die Pinole selbst als Kolben einer Kolben-/Zylindereinheit auszubilden, um das in der Pinole gelagerte Werkzeug axial zu verschieben, d.h. den Werkzeugvorschub vorzunehmen.

Gelöst wird diese Aufgabe durch eine Antriebseinheit mit den Merkmalen des Patentanspruchs 1. Vorteilhafte Ausgestaltung der Erfindung werden in den abhängigen Ansprüchen umschrieben.

Es gelingt durch einen von der kreisrunden Form abweichenden Querschnitt des Mantels am hinteren Ende der Pinole, letztere drehgesichert längsführbar zu gestalten. Wird die Pinole gegenüber der Führungsbüchse zudem abgedichtet, so kann die Pinole als Kolben einer Zylinderkolben-Antriebseinheit verwendet werden. Die erfindungsgemässe von der runden Querschnittsform abweichende, aus mehreren Radien zusammengesetzte Mantelform des hinteren Teils der Pinole kann kostengünstig hergestellt und dank der gewählten Form mit herkömmlichen Dichtungselementen, wie Dichtungsringen, O-Ringen etc., dichtend in der als Zylinder fungierenden Büchse geführt werden.

Anhand eines illustrierten Ausführungsbeispiels wird die Erfindung näher erläutert. Es zeigen
- Figur 1: eine perspektivische vereinfachte Darstellung einer Antriebseinheit,
- Figur 2: einen axialen Vertikalschnitt durch die Antriebseinheit in Figur 1 (Motor in Ansicht dargestellt),

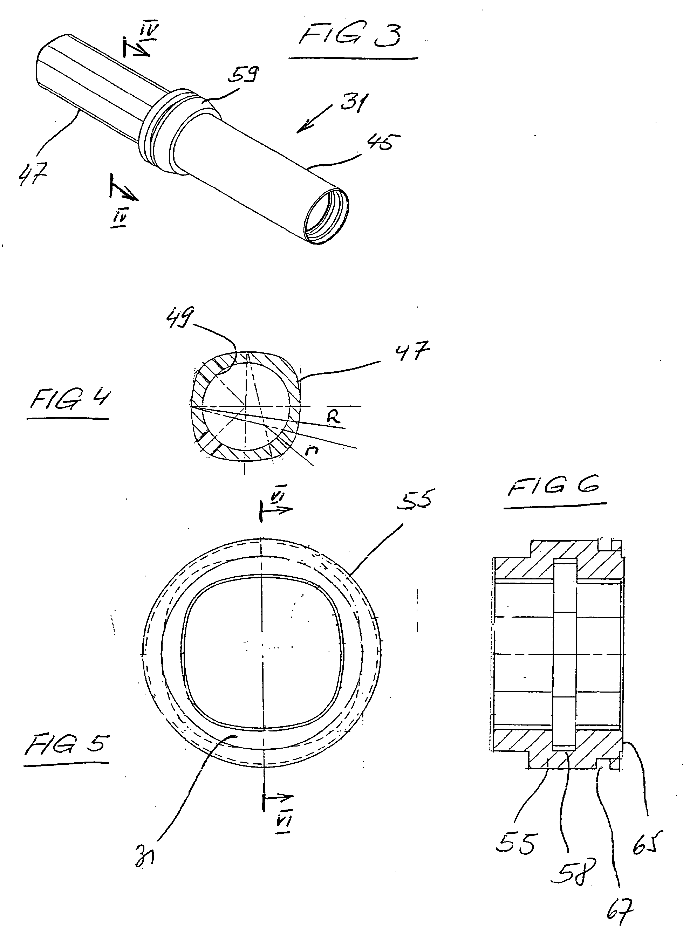

- Figur 3: eine perspektivische Darstellung der Pinole ohne darin eingesetzte Werkzeugspindel,
- Figur 4: einen Querschnitt durch den hinteren Teil der Pinole,
- Figur 5: einen Querschnitt durch die Führungsbüchse der Pinole,
- Figur 6: einen Axialschnitt durch die Führungsbüchse längs Linie VI-VI in Figur 5.

In der Übersichtsdarstellung einer Antriebseinheit 1 ist auf der linken Seite ein Antriebsmotor 3 und daran ein Getriebegehäuse 5 angeflanscht, in welchem ein Getriebe untergebracht ist. Am Getriebehäuse 5 ist ein Antriebsgehäuse 7 angeflanscht, in welchem eine Spindel 9 axial verschiebbar und drehbar gelagert ist. Auf dem vorderen, das Antriebsgehäuse 7 überragenden Ende der Spindel 9 sitzt ein Bearbeitungswerkzeug 11. Über dem Motor 3 ist ein Anschlusskasten 13 schematisch dargestellt.

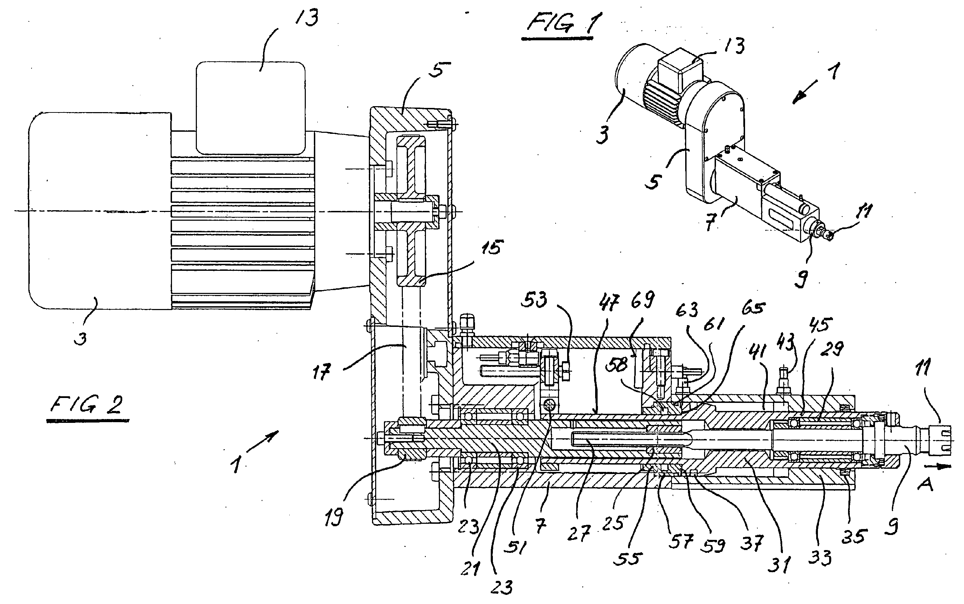

In der vergrösserten Darstellung der Antriebseinheit 1 in Figur 2 ist im Getriebegehäuse 5 ein Abtriebsritzel 15 über einen Zahnriemen 17 mit einem Antriebsritzel 19 auf einer Hauptwelle 21 dargestellt. Anstelle eines Riementriebes könnte selbstverständlich auch ein Zahnradgetriebe oder ein Direktantrieb der Hauptwelle mit einem Servomotor treten. Die Hauptwelle 21 ist mit zwei Wälzlagern 23 im Antriebsgehäuse 7 drehbar gelagert. In das vordere Ende 25 der Hauptwelle 21 greift das hintere Ende 27 der Spindel 9 ein. Das hintere Ende der Spindel 9 ist drehfest, jedoch axial verschiebbar mit der Hauptwelle 21 verbunden. Die Verbindung zwischen der Spindel 9 und der Hauptwelle 21 kann über eine Feinverzahnung oder dergleichen erfolgen.

Das vordere Ende der Spindel 9 ist mittels eines Wälzlagers 29 in einer Pinole 31 drehbar gelagert. Die Pinole 31 ihrerseits ist axial verschiebbar im vorderen Teil des Antriebsgehäuses 7 geführt. Zudem ist die Pinole 31 durch einen vorderen Dichtungsring 35 und einen hinteren Dichtungsring 37, welche Dichtungsringe 35,37 in einer Stufenbohrung 39 im vorderen Teil 33 des Antriebsgehäuse 7 gleitend aufliegen, geführt. Der weitere Teil 41 der Stufenbohrung 39 ist über einen Nippel 43 mit einer Druckluftquelle verbindbar. Der im vorderen Teil 33 des Antriebsgehäuses 7 liegende Teil der Pinole 31 weist einen zylinderförmigen Mantel 45 auf.

Der Querschnitt des Mantels 47 der Pinole 31 im hinteren Abschnitt ist im dargestellten Beispiel aus acht Radien zusammengesetzt. Jeweils vier grosse Radien R werden durch vier kleinere Radien r miteinander verbunden (Figur 4). Alternativ können auch je zwei oder drei grosse und kleine Radien den Mantel bilden. Im Innern weist das hintere Ende der Pinole 31 eine zylindrische Bohrung 49 auf, in welcher die Hauptwelle 21 mit Spiel hindurchgeführt wird.

Die Pinole 31 trägt auf ihrem hinteren Ende eine Bride 51, an welcher mindestens ein Stellschraube 53 zum Einstellen des Ausfahrweges der Pinole 31 aus dem Antriebsgehäuse 7 angebracht ist. Eine Hülse 55, in deren Bohrung der hintere Abschnitt der Pinole 31 gleitend geführt ist, ist drehfest im Antriebsgehäuse 7 eingesetzt. Ein Dichtungsring 57, der in einer in der Bohrung der Hülse 55 eingelassenen Nut 58 eingelegt ist, liegt dichtend auf dem nichtzylindrischen Mantel 47 des hinteren Abschnitts der Pinole 31 an.

In der Grundstellung der Pinole 31, wie sie in Figur 2 dargestellt ist, liegt die Hülse 55 mit ihrer vorderen Stirnfläche 65 an einem Absatz 59 zwischen dem hinteren Abschnitt der Pinole 31 und dem vorderen zylindrischen Abschnitt der Pinole 31 an. In der Peripherie des Absatzes 59 ist der hintere Dichtungsring 37 eingesetzt. Zwischen dem Absatz 59 und der vorderen Stirnfläche 65 der Hülse 55 ist ein ringförmiger Raum 61 ausgebildet, in welchen eine Leitung 63 mündet, welche mit einer Druckluftquelle verbindbar ist. In der Peripherie der Hülse 55 kann nahe der dem Raum 61 zugewandten Stirnfläche 65 peripher eine weitere Nut 67 eingelassen sein, welche einen Dichtungsring aufnimmt, um eine einwandfreie Abdichtung des Raumes 61 auch vom Innenraum des Antriebsgehäuses 7 sicherzustellen (vgl. auch Figur 6).

Nachfolgend wird kurz die Funktionsweise der Antriebseinheit beschrieben.

Durch den Antriebsmotor 3 wird über dessen Abtriebsritzel und den Zahnriemen 17 das Antriebsritzel 19 der Hauptwelle 21 in Drehung versetzt. Diese steht in formschlüssiger Verbindung mit dem hinteren Ende der Spindel 9 und dreht diese formschlüssig mit. Damit das Werkzeug 11 auf dem vorderen Ende der Spindel 9 in Richtung des Pfeiles A in ein Werkstück hingetrieben werden kann, wird über die erste Druckluftleitung 63 Luft in den Raum 61 eingeblasen und dadurch die Pinole 31 in Richtung des Pfeiles A verschoben. Die Verschiebung dauert so lange an, bis der Kopf der Stellschraube 53 an der vorderen Gehäusewand 69 anschlägt. Der Verschiebeweg der Pinole 31 bzw. des Werkzeugs 11 kann folglich mit der Stellschraube 53 genau eingestellt werden. Um das Werkzeug 11 wieder aus der nun erstellten Bohrung herauszuführen, wird durch den Nippel 43 Luft in den weiten Teil 41 der Stufenbohrung 39 eingeblasen. Die Druckerhöhung in diesem Raum bewirkt, dass die Pinole 31 in die Grundstellung zurückfährt. Der Absatz 59 zwischen dem hinteren Abschnitt und dem vorderen Abschnitt der Pinole 31 wirkt folglich als doppelt wirkender Kolben. Durch die erfindungsgemässe Formgebung des Mantels 47 der Pinole 31 im hinteren Abschnitt kann sich die Pinole 31 nicht mit der Spindel 9 mitdrehen, welche durch die beiden Dichtungsringe 35,37 in Reibverbindung mit dem vorderen Teil 33 des Antriebsgehäuses 7 steht und daher nicht gegen Verdrehung gesichert ist.

## Patentansprüche

1. Antriebseinheit (1) für Bearbeitungswerkzeug, umfassend ein Getriebegehäuse (5) mit einer darin gelagerten von einem Motor (3) antreibbaren Hauptwelle (21), einer zur Hauptwelle (21) axial verschiebbaren und mit der Hauptwelle (21) antreibbaren Spindel (9), an deren Ende das Bearbeitungswerkzeug (11) aufsetzbar ist, eine Pinole (31), in deren vorderen Abschnitt die Spindel (9) drehbar gelagert ist und deren hinterer Abschnitt von der Spindel (9) mit Spiel durchquert wird sowie ein Mittel zum drehfesten und axial verschiebbaren Führen der Pinole (31) im Gehäuse (5),
**dadurch gekennzeichnet, dass**
der Mantel (47) des hinteren Abschnitts der Pinole (31) einen Querschnitt aufweist, der mindestens zwei erste Bogenabschnitte mit Radius (R) und zwei die ersten Bogenabschnitte verbindende zweite Bogenabschnitte mit Radien (r) umfasst, wobei die ersten Radien (R) > als die zweiten Radien (r) sind.

2. Antriebseinheit nach Anspruch 1, **dadurch gekennzeichnet, dass** der aus mehreren unterschiedlichen Radien (r,R) zusammengesetzte hintere Abschnitt in einer mit dem Antriebsgehäuse (7) fest verbundenen Büchse (55) eingesetzt ist und dass der hintere Abschnitt mit Spiel in der Büchse (55), deren Bohrung einen zum Mantel des hinteren Abschnitts kongruenten Querschnitt aufweist, längsführbar gehalten ist.

3. Antriebseinheit nach Anspruch 2, **dadurch gekennzeichnet, dass** in der Bohrung der Büchse (55) eine umlaufende Nut (58) ausgebildet ist, in der ein Dichtungsring (57) eingelegt ist, welcher einen Druckraum (61) zwischen der Stirnfläche (65) der Büchse (55) und einem auf dem Mantel (47) des vorderen Abschnitts der Pinole (31) ausgebildeten Absatz fluiddicht abschliesst.

4. Antriebseinheit nach Anspruch 3, **dadurch gekennzeichnet, dass** auf der Aussenseite der Büchse (55) eine weitere umlaufende Nut (67) eingelassen ist.

5. Antriebseinheit nach einem der Ansprüche 3 oder 4, **dadurch gekennzeichnet, dass** die Mantelfläche (45) des zweiten Längsabschnittes der Pinole (31) bezüglich des Antriebsgehäuses (7) abgedichtet ist.

6. Antriebseinheit nach Anspruch 5, **dadurch gekennzeichnet, dass** der Druckraum (61) mit einer Druckquelle für ein gasförmiges oder flüssiges Medium verbunden ist, mit welchem die Pinole (31) samt Spindel im Antriebsgehäuse (7) axial vorschiebbar ist.

7. Antriebseinheit nach Anspruch 6, **dadurch gekennzeichnet, dass** ein zweiter Druckraum auf der hinteren Seite des Absatzes (59) ausgebildet und mit einer Druckquelle verbindbar ist.

## Claims

1. Drive unit (1) for a working tool, the said drive unit comprising: a transmission housing (5) with a main shaft (21) that is mounted in the said transmission housing and is driveable by a motor (3); a spindle (9) that is axially displaceable relative to the said main shaft (21) and is driveable with the said main shaft (21), the working tool (11) being placeable on the end of the said spindle; a spindle sleeve (31), in the front portion of which the spindle (9) is rotatably mounted and the rear portion of which is traversed by the spindle (9) with play; as well as a means for guiding the spindle sleeve (31) in the housing (5) in a non-rotatable, axially displaceable manner, **characterised in that** the outer surface (47) of the rear section of the spindle sleeve (31) has a cross-section, which includes at least two first curved sections with radius (R) and two second curved sections that connect the first curved sections with radii (r), wherein the first radii (R) are > than the second radii (r).

2. Drive unit according to claim 1, **characterised in that** the rear section that is composed of a plurality of different radii (r, R) is inserted in a bushing (55) that is fixedly connected to the drive housing (7), and **in that** the rear section is retained with play in the bushing (55), the bore of which includes a cross-section that is congruent to the outer surface of the rear section, so as to be longitudinally guidable.

3. Drive unit according to claim 2, **characterised in that** in the bore of the bushing (55) there is a circumferential groove (58), in which a sealing ring (57) is inserted, the said sealing ring closing off a pressure chamber (61) between the end face (65) of the bushing (55) and a shoulder that is configured on the outer surface (47) of the front section of the spindle sleeve (31) so as to be fluid tight.

4. Drive unit according to claim 3, **characterised in that** an additional circumferential groove (67) is admitted on the outside of the bushing (55).

5. Drive unit according to one of claims 3 or 4, **characterised in that** the outer surface (45) of the second longitudinal section of the spindle sleeve (31) is sealed with reference to the drive housing (7).

6. Drive unit according to claim 5, **characterised in that** the pressure chamber (61) is connected to a pressure source for a gaseous or liquid medium, by means of which the spindle sleeve (31) together with the spindle can be advanced axially in the drive housing (7).

7. Drive unit according to claim 6, **characterised in that** a second pressure chamber is configured on the rear side of the shoulder (59) and is connectable to a pressure source.

## Revendications

1. Unité d'entraînement (1) pour outil d'usinage, comprenant un carter (5) de transmission dans lequel est monté un arbre principal (21) pouvant être entraîné par un moteur (3) ; une broche (9) pouvant coulisser axialement vis-à-vis de l'arbre principal (21), pouvant être entraînée avec ledit arbre principal (21), et à l'extrémité de laquelle l'outil d'usinage (11) peut être implanté ; un fourreau (31) dans la région antérieure duquel la broche (9) est montée rotative, et dont la région postérieure est parcourue avec jeu par ladite broche (9) ; ainsi qu'un moyen de guidage du fourreau (31) dans le carter (5), avec verrouillage rotatif et à coulissement axial,
**caractérisée par le fait**
**que** l'enveloppe (47) de la région postérieure du fourreau (31) présente une section transversale englobant au moins deux premiers tronçons d'arc de cercle de rayon (R) et deux seconds tronçons d'arc de cercle de rayons (r), reliant les premiers tronçons d'arc de cercle, les premiers rayons (R) étant plus grands que les seconds rayons (r).

2. Unité d'entraînement selon la revendication 1, **caractérisée par le fait que** la région postérieure, comprenant plusieurs rayons différents (r, R), est insérée dans une douille (55) reliée rigidement au carter d'entraînement (7) ; et **par le fait que** ladite région postérieure est retenue, avec jeu et avec faculté de guidage longitudinal, dans la douille (55) dont l'alésage possède une section transversale complémentaire de celle de l'enveloppe de ladite région postérieure.

3. Unité d'entraînement selon la revendication 2, **caractérisée par le fait qu'**une rainure périphérique (58), façonnée dans l'alésage de la douille (55), renferme une bague d'étanchement (57) assurant l'obturation, avec étanchéité aux fluides, d'une chambre de pression (61) située entre la face extrême (65) de la douille (55), et un gradin ménagé sur l'enveloppe (47) de la région antérieure du fourreau (31).

4. Unité d'entraînement selon la revendication 3, **caractérisée par le fait qu'**une autre rainure périphérique (67) est pratiquée sur la face extérieure de la douille (55).

5. Unité d'entraînement selon l'une des revendications 3 ou 4, **caractérisée par le fait que** la surface (45) de l'enveloppe de la seconde région longitudinale du fourreau (31) est rendue étanche vis-à-vis du carter d'entraînement (7).

6. Unité d'entraînement selon la revendication 5, **caractérisée par le fait que** la chambre de pression (61) est raccordée à une source de pression dédiée à un agent gazeux ou liquide par lequel le fourreau (31) peut être avancé dans le sens axial, dans le carter d'entraînement (7), conjointement à la broche.

7. Unité d'entraînement selon la revendication 6, **caractérisée par le fait qu'**une seconde chambre de pression est façonnée sur la face postérieure du gradin (59), et peut être raccordée à une source de pression.
